# EUROPÄISCHE PATENTSCHRIFT

(11) **EP 3 113 951 B1**
(45) Veröffentlichungstag und Bekanntmachung des Hinweises auf die Patenterteilung: **31.03.2021**
(21) Anmeldenummer: 15710145.2
(22) Anmeldetag: 05.03.2015
(51) Int. Cl.: B32B 37/10

(54) **LAMINIERVORRICHTUNG UND VERFAHREN ZUR HERSTELLUNG EINES LAMINATS**
LAMINATING DEVICE AND METHOD FOR PRODUCING A LAMINATE
DISPOSITIF DE LAMINAGE ET PROCÉDÉ DE PRODUCTION D'UN LAMINÉ

(30) Priorität: 06.03.2014 DE 102014204125
(43) Veröffentlichungstag der Anmeldung: 11.01.2017
(73) Patentinhaber: NICE Solar Energy GmbH, 74523 Schwäbisch Hall (DE)
(72) Erfinder: LENZ, Daniel, 03099 Kolkwitz (DE); HASELBAUER, Martin, 04275 Leipzig (DE); STRICKERT, Volker, 04157 Leipzig (DE)
(74) Vertreter: Patentanwälte Bressel und Partner mbB
(86) Internationale Anmeldenummer: PCT/EP2015/054597
(87) Internationale Veröffentlichungsnummer: WO 2015/132334

(56) Entgegenhaltungen:
- EP-A1- 2 239 789
- FR-A1- 2 928 861
- US-B1- 6 197 146

## Beschreibung

Die Erfindung betrifft eine Laminiervorrichtung, insbesondere zur Herstellung eines Photovoltaikmoduls, sowie ein Verfahren zur Herstellung eines Laminats, insbesondere eines Photovoltaikmoduls.

Aus dem Stand der Technik sind Verfahren zur Herstellung von Photovoltaikmodulen bekannt, in denen ein Laminationsvorgang durchgeführt wird. So beschreibt z.B. die US 2012/103397 A ein Verfahren zur Herstellung einer Kantenabdichtung eines Photovoltaikmoduls. Die Druckschrift beschreibt als Problem, dass in einem Laminationsvorgang aufgrund einer Elastizität einer Membran einer Membranpresse sich eine obere Glasplatte insbesondere in Eck- und Kantenbereichen verformen kann. Wenn die obere Glasplatte in einem solchen Fall nach der Lamination in ihren ursprünglichen Zustand zurückkehrt, können in den Eck- und Kantenbereichen, insbesondere in einem in diesen Bereichen angeordnetem Dichtmaterial, Teilabrisse des Dichtmaterials von der Glasplatte und somit Blasen entstehen. Dies kann auch als Delamination beschrieben werden. Die Druckschrift schlägt als Lösung vor, einen Laminierkörper mit einem Kern zwischen einer Glasabdeckung und einem rückseitigen Glas anzuordnen, der die Kanten einrahmt.

Weiter bekannt ist die JP 2010245375 A. Die Druckschrift schlägt eine Pressplatte vor, die eine gesamte obere Oberfläche eines Schutzelements eines Photovoltaikmoduls abdeckt, wobei ein Laminat über die Pressplatte mit Druck beaufschlagt und erhitzt wird. Die Druckschrift beschreibt die Pressplatte allerdings als Bauteil, welches vor einem Laminationsvorgang in einem zusätzlichen Schritt auf den zu laminierenden Körper aufgebracht werden muss. Insbesondere offenbart die Druckschrift keine Halterung des Laminationskörpers.

Die US 6,197,146 B1 offenbart eine Vorrichtung zum Verbinden einer Haut einer Tragfläche mit einem Kern, die eine hybride Pressblechanordnung zum Abdecken der Oberfläche der Tragfläche umfasst, die einem Verbindungsdruck ausgesetzt ist. Die hybride Pressblechanordnung umfasst eine zentrale elastomere Komponenten und eine periphere halbsteife metallische Komponente.

Es stellt sich das technische Problem, eine Laminiervorrichtung und ein Verfahren zur Herstellung eines Laminats, insbesondere eines durch eine Lamination hergestellten Photovoltaikmoduls, zu schaffen, welche eine Herstellung des Laminats mit einer höheren Qualität, insbesondere eine Herstellung mit einer verringerten Anzahl von im Laminat eingeschlossenen Blasen, ermöglichen.

Die Lösung des technischen Problems ergibt sich durch die Gegenstände mit den Merkmalen der Ansprüche 1 und 7. Weitere vorteilhafte Ausgestaltungen ergeben sich aus den Unteransprüchen.

Es ist eine Grundidee der Erfindung, ein Kraftverteilungselement zwischen einer Membran einer Laminiervorrichtung und einer membranseitigen Oberfläche eines Laminationsobjektes derart anzuordnen, dass Kräfte, die insbesondere auf einen Randbereich einer membranseitigen Oberfläche des Laminationsobjektes durch die Membran ausgeübt werden, auf einen Teilbereich der Oberfläche verteilt werden, wobei das Kraftverteilungselement an der Laminiervorrichtung gehaltert ist.

Vorgeschlagen wird eine Laminiervorrichtung, wobei die Laminiervorrichtung zumindest ein Membranelement umfasst. Mittels Laminiervorrichtung ist in bekannter Weise ein gewünschter Druck und/oder eine gewünschte Temperatur bereitstellbar, der/die auf ein Laminationsobjekt, also ein zu laminierendes Objekt, wirken kann/können.

Die Laminiervorrichtung kann eine Laminationskammer aufweisen. Die Laminationskammer kann einen Volumenbereich bezeichnen oder umfassen, in dem das Laminationsobjekt für die Lamination anzuordnen ist. Die Laminationskammer kann hierbei zumindest teilweise von dem Membranelement umgeben sein, z.B. zwischen einer Grundfläche der Laminiervorrichtung und dem Membranelement ausgebildet sein.

Weiter umfasst die Laminiervorrichtung zumindest ein Kraftverteilungselement. Das zumindest eine Kraftverteilungselement kann zwischen dem mindestens einen Membranelement und der Grundfläche der Laminationskammer angeordnet sein. Über das mindestens eine Kraftverteilungselement ist eine Laminationskraft, die durch das Membranelement auf ein Laminationsobjekt übertragbar oder ausübbar ist, auf zumindest einen Teilbereich einer membranseitigen Oberfläche des Laminationsobjektes verteilbar. So kann das mindestens eine Kraftverteilungselement derart ausgebildet und/oder in oder an der Laminiervorrichtung angeordet sein, dass die Laminationskraft durch das mindestens ein Kraftverteilungselement auf den zumindest einen Teilbereich der membranseitigen Oberfläche des Laminationsobjektes verteilbar ist.

Das Laminationsobjekt kann hierbei in der Laminationskammer anordenbar oder angeordnet sein. Durch eine Lamination, insbesondere also durch ein Erzeugen und Beaufschlagen des Laminationsobjekts mit einem vorbestimmten Druck und/oder einer vorbestimmten Temperatur, kann aus dem Laminationsobjekt ein Laminat hergestellt werden.

Es ist vorstellbar, dass das Laminationsobjekt ein Verbundsicherheitsglasschichtkörper ist, wobei durch eine Lamination aus dem Verbundsicherheitsglasschichtkörper ein Verbundssicherheitsglas hergestellt werden kann.

Insbesondere kann das Laminationsobjekt ein Modul-Schichtkörper sein, wobei durch Lamination des Modul-Schichtkörpers ein Photovoltaikmodul hergestellt wird. Der Modul-Schichtkörper kann insbesondere ein erstes Abdeckelement, welches auch als frontseitiges Abdeckelement bezeichnet werden kann, ein weiteres Abdeckelement, welches auch als rückseitiges Abdeckelement bezeichnet werden kann, eine Zwischenschicht, eine aktive Schicht und eine Abdichtschicht umfassen. Das erste Abdeckelement und/oder das weitere Abdeckelement können insbesondere aus Glas, beispielsweise als Glasplatte, ausgebildet sein. Die Zwischenschicht kann insbesondere durch eine Laminierfolie zur Verbindung des ersten und des weiteren Abdeckelements und zur Einbettung der aktiven Schicht ausgebildet sein. Die Laminierfolie kann z.B. aus EVA (Ethylenvinylacetat) oder aus PVB (Polyvinylbutyral) oder aus Polyolefine bestehen. Die Abdichtschicht kann insbesondere eine Butyl-Schicht sein, die insbesondere in einem Randbereich des zwischen dem ersten Abdeckelement und dem weiteren Abdeckelement eingefassten Volumens angeordnet ist. Die aktive Schicht dient zur Umwandlung von Licht in elektrische Energie und kann beispielsweise mindestens eine Solarzelle umfassen oder ausbilden. Für eine Lamination kann die membranseitige Oberfläche entweder eine äußere Oberfläche des ersten oder des weiteren Abdeckelements sein. Über das mindestens eine Kraftverteilungselement kann also eine Laminationskraft auf zumindest einen Teilbereich der membranseitigen Oberfläche verteilt werden.

Insbesondere kann das mindestens eine Kraftverteilungselement derart in oder an der Laminiervorrichtung angeordnet und/oder ausgebildet sein, dass zumindest ein Teil der Laminationskraft, die durch das Membranelement auf zumindest einen Abschnitt eines Randbereichs der membranseitigen Oberfläche übertragen oder ausgeübt wird, durch das mindestens eine Kraftverteilungselement auf den zumindest einen Teilbereich, vorzugsweise nur oder ausschließlich auf einen Teilbereich, der membranseitigen Oberfläche des Laminationsobjekts, insbesondere also des Modul-Schichtkörpers, verteilbar ist. Der Teilbereich der membranseitigen Oberfläche kann insbesondere größer als der Randbereich sein. Weiter insbesondere kann der Teilbereich den Randbereich, insbesondere vollständig, umfassen. Weiter kann der Teilbereich kleiner als die gesamte membranseitige Oberfläche des Laminationsobjekts sein. Somit ist es nicht notwendig, dass das Kraftverteilungselement die gesamte membranseitige Oberfläche des Laminationsobjektes abdeckt. Der Randbereich kann hierbei einen sich vom Rand zum Zentrum der membranseitigen Oberfläche erstreckenden Bereich bezeichnen. Der Randbereich kann eine vorbestimmte Breite aufweisen, die kleiner als die Breite bzw. Länge der membranseitigen Oberfläche ist. Beispielsweise kann die Breite des Randbereichs 5 %, 10 % oder 20 % der Breite bzw. Länge der membranseitigen Oberfläche betragen.

Weiter insbesondere kann das mindestens eine Kraftverteilungselement derart ausgebildet und/oder angeordnet sein, dass zumindest ein Teil einer Laminationskraft, die durch Teilbereiche der Membran, die in einer gemeinsamen Projektionsebene neben einem seitlichen Rand des Laminationsobjektes angeordnet sind, auf einen Randbereich, insbesondere auf eine Kante, des Laminationsobjektes übertragen oder ausgeübt werden, auf den zumindest einen Teilbereich der membranseitigen Oberfläche verteilbar ist. Hierbei kann die gemeinsame Projektionsebene senkrecht zu einer Laminationsrichtung orientiert sein, wobei die Laminationsrichtung senkrecht zu der Grundfläche der Laminationskammer und/oder senkrecht zu der membranseitigen Oberfläche des Laminationsobjekts orientiert sein kann.

Das Kraftverteilungselement kann eine vorbestimmte, insbesondere eine hohe, Biegesteifigkeit aufweisen. Das Kraftverteilungselement kann z.B. teilweise aus Aluminium oder aus Stahl ausgebildet sein.

Die Laminiervorrichtung kann insbesondere eine Vorrichtung zur Herstellung zumindest eines Photovoltaikmoduls sein.

Erfindungsgemäß ist das mindestens eine Kraftverteilungselement an der Laminiervorrichtung, insbesondere zumindest an einem Teil der Laminiervorrichtung, gehaltert. Dies kann bedeuten, dass das mindestens eine Kraftverteilungselement mechanisch direkt oder indirekt, z.B. über ein oder mehrere Befestigungselemente, an einem Teil der Laminiervorrichtung befestigt ist. Die mechanische Verbindung kann insbesondere eine kraft- und/oder form- und/oder stoffschlüssige Verbindung sein. Vorzugsweise ist die mechanische Verbindung eine lösbare Verbindung. Z.B. kann das mindestens eine Kraftverteilungselement an dem Membranelement gehaltert sein. Vorzugsweise kann das Kraftverteilungselement an einem ortsfest angeordneten Teil der Laminiervorrichtung, beispielsweise an einem Laminatorspannrahmen, gehaltert sein. Der Laminatorspannrahmen bezeichnet hierbei einen Teil der Laminiervorrichtung, an welchem das Membranelement befestigt ist. Z.B. kann das Membranelement im Laminatorspannrahmen eingespannt oder eingeklemmt sein.

Weiter insbesondere kann das mindestens eine Kraftverteilungselement beweglich gegenüber einem ortsfest angeordneten Teil der Laminiervorrichtung gehaltert sein. Insbesondere kann das mindestens eine Kraftverteilungselement derart beweglich gehaltert sein, dass es mit dem Membranelement zusammen bewegbar ist. Dies bedeutet, dass eine vorbestimmte Bewegung des Membranelements auch zu einer Bewegung des mindestens einen Kraftverteilungselements führt. Allerdings ist es nicht zwingend, dass jede Bewegung des Membranelements auch zu einer Bewegung des Kraftverteilungselements führt.

Durch die vorgeschlagene Laminiervorrichtung ergibt sich in vorteilhafter Weise, dass eine durch das Membranelement übertragene Laminationskraft insbesondere in Randbereichen des Laminationsobjektes verbessert über zumindest einen Teilbereich der Oberfläche des Laminationsobjektes verteilt wird, wodurch eine Delamination vermieden bzw. reduziert wird und sich weniger Blasen im Laminationsobjekt nach der Lamination befinden, insbesondere in den vorhergehend erläuterten Randbereichen. Dies haben auch entsprechend durchgeführte Versuche gezeigt.

Gleichzeitig wird das Verfahren zur Herstellung vereinfacht, da es aufgrund der vorgeschlagenen Halterung des Kraftverteilungselements an der Laminiervorrichtung nicht notwendig ist, vor dem Laminationsvorgang in einem separaten Schritt eine Platte auf die membranseitige Oberfläche aufzulegen.

Weiter umfasst die Laminiervorrichtung mindestens ein Halteelement zur Halterung des mindestens einen Kraftverteilungselements. Hierbei kann das Halteelement der Halterung des Kraftverteilungselements mit einer vorbestimmten Ausrichtung bzw. mit einer Ausrichtung aus einem vorbestimmten Ausrichtungsbereich und/oder an einer vorbestimmten Position bzw. an einer Position aus einem vorbestimmten Positionsbereich relativ zu einem in der Laminationskammer angeordneten Laminationsobjekt dienen. Das mindestens eine Halteelement kann insbesondere an der Laminiervorrichtung, insbesondere an dem ortsfesten Teil, befestigt sein.

Das mindestens Halteelement kann als Befestigungselement ausgebildet sein oder mindestens ein solches umfassen, welches eine direkte oder indirekte Befestigung des Kraftverteilungselements an der Laminiervorrichtung, insbesondere an dem ortsfesten Teil der Laminiervorrichtung, ermöglicht. Beispielsweise kann das mindestens eine Kraftverteilungselement an dem Halteelement befestigt sein, wobei das Halteelement an der Laminiervorrichtung befestigt ist. Die Befestigung kann hierbei insbesondere eine lösbare Befestigung sein. Somit kann also das mindestens eine Kraftverteilungselement an einer vorbestimmten Position bzw. in einem vorbestimmten Positionsbereich relativ zur Laminiervorrichtung und/oder mit einer vorbestimmten Ausrichtung relativ zur Laminiervorrichtung gehaltert sein. Das mindestens eine Halteelement kann hierbei als separates Bauteil, insbesondere verschieden von dem Membranelement, ausgebildet sein.

Das Halteelement ermöglicht in vorteilhafter Weise die bauliche Integration des mindestens einen Kraftverteilungselements in die Laminiervorrichtung an einer vorbestimmten Position bzw. in einem vorbestimmten Positionsbereich in der Laminationskammer und/oder mit einer vorbestimmten Ausrichtung. Insbesondere kann eine existierende Laminiervorrichtung mittels des mindestens einen Halteelements mit dem mindestens einen Kraftverteilungselement nachgerüstet werden.

Weiter ist das Halteelement als Gewebe ausgebildet. Das Gewebe kann eine vorbestimmte Maschengröße aufweisen, beispielsweise eine Maschenweite von 4mm. Hierbei kann angenommen werden, dass eine kleine Maschengröße eine genauere Positionierung eines Kraftverteilungselements ermöglicht und gleichzeitig eine Stabilität des Halteelements erhöht, wodurch wiederum eine höhere Haltekraft durch das Halteelement bereitgestellt werden kann. Hierdurch kann das mindestens eine Kraftverteilungselement in vorteilhafter Weise an mehreren Positionen und/oder mit mehreren Ausrichtungen relativ zum Halteelement an diesem befestigt werden. Die Befestigung kann hierbei beispielsweise über ein geeignetes

Befestigungselement, insbesondere einen Faden oder einen Draht, erfolgen, durch welche das Gewebe und das mindestens eine Kraftverteilungselement mechanisch aneinander befestigt werden können. Somit ist auch eine lösbare Befestigung mittels des als Gewebe ausgebildeten Halteelements möglich. Insbesondere kann das Halteelement als Aramid-Gewebe ausgebildet sein.

In einer weiteren Ausführungsform ist das Halteelement an einem Laminatorspannrahmen befestigt. Neben dem mindestens einen Halteelement kann auch das Membranelement an dem Laminatorspannrahmen befestigt sein.

Dies ermöglicht somit eine möglichst einfache mechanische Integration des Kraftverteilungselements in eine, insbesondere bereits existierende, Laminiervorrichtung. In einer weiteren bevorzugten Ausführungsform umfasst das Kraftverteilungselement einen plattenförmig ausgebildeten Abschnitt oder ist, insbesondere vollständig, plattenförmig ausgebildet. Das mindestens eine Kraftverteilungselement kann beispielsweise derart, insbesondere über das mindestens eine Halteelement, gehaltert sein, das eine Oberfläche des plattenförmigen Abschnitts parallel zu einer Grundfläche der Laminierkammer bzw. parallel zu einer membranseitigen Oberfläche des Laminationsobjektes orientiert sein kann. In diesem Fall kann das Kraftverteilungselement derart gehaltert sein, dass zumindest ein Teil des plattenförmigen Abschnitts über dem vorhergehend erläuterten Randbereich des Laminationsobjekts angeordnet ist. Durch die zumindest teilweise plattenförmige Ausbildung des Kraftverteilungselements ergibt sich in vorteilhafter Weise eine möglichst gleichmäßige Kraftverteilung auf einen Teilbereich der membranseitigen Oberfläche des Laminationsobjektes.

Die Oberfläche des plattenförmig ausgebildeten Abschnitts kann hierbei vorbestimmte Dimensionen aufweisen, insbesondere kann die Oberfläche kleiner als eine membranseitige Oberfläche des Laminationsobjektes sein. Hierbei kann eine Oberfläche z.B. eine Länge und Breite im Bereich weniger Zentimeter bis hin zu einer Länge und/oder einer Breite einer Oberfläche des Laminationsobjekts aufweisen. Insbesondere kann eine Oberfläche eine Länge von 0.2m und eine Breite von 0.3m oder eine Länge von 0.3m und eine Breite von 0.3m aufweisen.

In einer weiteren Ausführungsform weist das Kraftverteilungselement zumindest einen Abstützabschnitt zur Abstützung auf einer Grundfläche der Laminationskammer auf. Somit kann der Abstützabschnitt in mechanischen Kontakt mit der Grundfläche der Laminationskammer treten. Dies ermöglicht in vorteilhafter Weise, dass ein weiterer Teil der vorhergehend erläuterten Laminationskraft in die Grundfläche und somit beispielsweise in ein Gestell oder Fundament der Laminiervorrichtung eingeleitet werden kann. Der mindestens eine Abstützabschnitt kann beispielsweise eine Höhe in Laminationsrichtung aufweisen, die einer gewünschten Höhe des Laminats, also des Laminationsobjekts nach der Lamination, entspricht.

In einer weiteren Ausführungsform ist das Kraftverteilungselement plattenförmig ausgebildet, wobei eine Oberfläche des plattenförmigen Kraftverteilungselements in einem Teilbereich der Oberfläche einen erhabenen, insbesondere einen in Laminationsrichtung erhabenen, Bereich aufweist oder ausbildet. Ein erhabener Bereich kann hierbei einen von einer Grundfläche ab- oder hervorstehenden Bereich bezeichnen. Die Grundfläche kann zumindest einen Teil, insbesondere einen ebenen Teil, der Oberfläche des plattenförmigen Kraftverteilungselements umfassen. Der erhabene Bereich kann hierbei den vorhergehend erläuterten Abstützabschnitt oder Abstützsteg ausbilden. Der erhabene Bereich kann hierbei insbesondere an einer Unterseite des Kraftverteilungselements, also einer der membranseitigen Oberfläche des Laminationsobjektes zugewandten Seite des Kraftverteilungselements angeordnet sein.

Der Abstützabschnitt bzw. der erhabene Bereich kann hierbei an einem seitlichen Rand des plattenförmig ausgebildeten Kraftverteilungselements angeordnet sein. Hierdurch kann sich beispielsweise ein abgewinkeltes Profil des Kraftverteilungselements ergeben. In anderen Worten kann das Kraftverteilungselement in einem Querschnitt L-förmig ausgebildet sein, wobei ein Schenkel des L-förmigen Querschnitts von einem plattenförmigen Abschnitt des Kraftverteilungselements und der weitere Schenkel von dem Abstützabschnitt bzw. dem erhabenen Bereich ausgebildet wird.

Allerdings ist es auch vorstellbar, dass der Abstützabschnitt bzw. der mindestens eine erhabene Bereich an einer vorbestimmten Position und/oder mit einer vorbestimmten Ausrichtung in einem Innenbereich der Oberfläche des plattenförmigen Abschnitts angeordnet ist, wobei der Innenbereich von Randbereichen des plattenförmigen Abschnitts umgeben ist.

Insgesamt ergibt sich in vorteilhafter Weise, dass die vorhergehend erläuterte Laminationskraft teilweise auf die membranseitige Oberfläche des Laminationsobjektes verteilt und teilweise in die Grundfläche eingeleitet wird. Hierdurch lässt sich in vorteilhafter Weise die Verformung insbesondere von Randbereichen des Laminationsobjektes während der Lamination weiter minimieren, wodurch wiederum die Gefahr einer Blasenbildung im Laminationsobjekt bzw. Laminat weiter reduziert wird.

Weiter kann eine Oberfläche des Kraftverteilungselements, insbesondere eine der membranseitigen Oberfläche des Laminationsobjektes zugewandte Oberfläche, mit einer vorbestimmten Härte bereitgestellt werden, wobei die Härte der Oberfläche des Kraftverteilungselements geringer als eine Härte der membranseitigen Oberfläche des Laminationsobjektes sein kann. Insbesondere kann die Oberfläche des Kraftverteilungselements mit einem vorbestimmten Material, beispielsweise Filz, beschichtet werden. Die Beschichtung kann hierbei selbstverständlich mit geeigneten Verfahren, beispielsweise durch Kleben oder durch Bedampfen, erfolgen. Weiter kann die Oberfläche eine vorbestimmte Rauigkeit aufweisen, insbesondere eine Rauigkeit, die nicht zum Verkratzen der membranseitigen Oberfläche des Laminationsobjekts führt.

In einer weiteren Ausführungsform umfasst die Laminiervorrichtung mehrere Kraftverteilungselemente, die jeweils an der Laminiervorrichtung gehaltert sind. Jedes Kraftverteilungselement ist zwischen dem mindestens einen Membranelement und einer Grundfläche der Laminationskammer angeordnet. Weiter ist über jedes Kraftverteilungselement die Laminationskraft, die durch das Membranelement übertragen wird, auf zumindest einen Teilbereich einer membranseitigen Oberfläche eines oder mehrerer in der Laminationskammer anordenbaren Laminationsobjekte verteilbar. So ist es z.B. möglich, dass durch ein Kraftverteilungselement eine Laminationskraft auf einen Teilbereich einer membranseitigen Oberfläche eines ersten Laminationsobjektes sowie auf einen Teilbereich einer membranseitigen Oberfläche eines weiteren Laminationsobjektes verteilbar ist. Somit kann die Laminationskraft durch das mindestens eine Kraftverteilungselement auf ein oder mehrere, insbesondere bis zu vier oder sogar mehr als vier, Laminationsobjekte verteilbar sein.

Die verschiedenen Kraftverteilungselemente können hierbei jeweils derart angeordnet und/oder ausgebildet sein, dass die auf Randbereiche der Laminationsobjekte jeweils ausgeübte Laminationskraft auf einen Teilbereich einer membranseitigen Oberfläche genau eines Laminationsobjekts oder auf Teilbereiche von membranseitigen Oberflächen mehrerer Laminationsobjekte verteilbar ist, wobei die jeweiligen Teilbereiche jeweils größer als der/die Randbereich(e) des/der Laminationsobjektes/e sein können und diese/n umfassen kann/können. Somit können insbesondere die auf die Randbereiche wirkenden Laminationskräfte auf eine Oberfläche eines Laminationsobjektes oder Oberflächen mehrerer Laminationsobjekte verteilt werden.

Dies ermöglicht in vorteilhafter Weise die Lamination eines oder mehrerer Modul-Schichtkörper(s), insbesondere von bis zu neun Modul-Schichtkörpern, um ein oder mehrere Photovoltaikmodul(e) in einem Laminationsvorgang herzustellen. Hierbei kann ein Kraftverteilungselement einen oder zwei, insbesondere benachbarte, Randbereich(e) eines Modul-Schichtkörpers gleichzeitig abdecken. Auch kann das Kraftverteilungselement zwei Randbereiche zweier verschiedener, insbesondere benachbarter, Modul-Schichtkörper gleichzeitig abdecken. Auch kann das Kraftverteilungselement ein oder zwei oder mehr Randbereiche von bis zu vier Modul-Schichtkörpern gleichzeitig abdecken. Dies bedeutet, dass das mindestens eine Kraftverteilungselement in Laminationsrichtung über dem/den entsprechenden Randbereiche(n) des/der Laminationsobjekt(e) angeordnet sein kann.

Hierbei können an einem äußeren Rand einer Anordnung von mehreren Laminationsobjekten angeordnete Kraftverteilungselemente jeweils mindestens einen Abstützabschnitt aufweisen und beispielsweise im Querschnitt L-förmig ausgebildet sein. In einem Innenbereich der Anordnung mehrerer Laminationsobjekte angeordnete Kraftverteilungselemente können hierbei rein plattenförmig ausgebildet sein.

Dies ermöglicht in vorteilhafter Weise die Herstellung mehrerer Photovoltaikmodule in einem Laminationsvorgang, wobei für jedes Photovoltaikmodul die Gefahr einer Blasenbildung im Laminationsmodul aufgrund einer erhöhten Laminationskraft im Bereich von Randabschnitten verringert wird.

Weiter vorgeschlagen wird ein Verfahren zur Herstellung mindestens eines Laminats, insbesondere eines Photovoltaikmoduls.

In einem ersten Schritt wird mindestens ein Laminationsobjekt in einer Laminiervorrichtung, insbesondere in einer Laminationskammer der Laminiervorrichtung, angeordnet. Die Laminationskammer kann hierbei beispielsweise unterhalb eines Membranelements der Laminiervorrichtung ausgebildet sein oder bereitgestellt werden.

Die die Laminiervorrichtung umfasst zumindest ein Kraftverteilungselement, wobei über das mindestens eine Kraftverteilungselement eine Laminationskraft, die durch das Membranelement auf eine membranseitige Oberfläche des Laminationsobjekts übertragbar oder ausübbar ist, auf zumindest einen Teilbereich der membranseitigen Oberfläche verteilbar ist.

Weiter ist das mindestens eine Kraftverteilungselement an der Laminiervorrichtung gehaltert. Wie vorhergehend erläutert, kann der Teilbereich der membranseitigen Oberfläche größer als ein Randbereich der membranseitigen Oberfläche sein. Weiter kann der Teilbereich den Randbereich umfassen.

In einem weiteren Schritt wird ein vorbestimmter Druck auf das Membranelement bereitgestellt. Hierzu kann beispielsweise die vorhergehend erläuterte Laminationskammer evakuiert werden und/oder auf einer, der Laminationskammer abgewandten Seite des Membranelements ein vorbestimmter Druck erzeugt werden. Aufgrund des auf das Membranelement ausgeübten Drucks kann das Membranelement eine Kraft auf die membranseitige Oberfläche übertragen oder ausüben. Alternativ oder kumulativ wird eine vorbestimmte Temperatur bereitgestellt.

Während der Bereitstellung des vorbestimmten Drucks wird zumindest ein Teil einer Laminationskraft, die durch das Membranelement auf eine membranseitige Oberfläche, insbesondere auf einen Randbereich der Oberfläche, übertragen oder ausgeübt wird, durch das mindestens eine Kraftverteilungselement auf zumindest einen Teilbereich der membranseitigen Oberfläche des mindestens einen Laminationsobjektes verteilt.

Insbesondere kann zumindest ein Teil der Laminationskraft ausschließlich auf einen Teilbereich, aber nicht auf die gesamte membranseitige Oberfläche des mindestens einen Laminationsobjektes verteilt werden.

Die Laminiervorrichtung kann hierbei insbesondere eine Laminiervorrichtung gemäß einer der vorhergehend beschriebenen Ausführungsformen sein. In diesem Fall ist also das vorgeschlagene Verfahren mittels einer Laminiervorrichtung gemäß einer der vorhergehend beschriebenen Ausführungsformen durchführbar.

Das Laminationsobjekt kann vorzugsweise ein vorhergehend beschriebener Modul-Schichtkörper sein.

Hierdurch ergibt sich in vorteilhafter Weise ein Verfahren, welches eine Zahl von im Laminat, insbesondere im laminierten Photovoltaikmodul, eingeschlossenen Blasen, insbesondere in Randbereichen eingeschlossenen Blasen, reduziert.

In einer weiteren Ausführungsform wird die Laminationskraft, insbesondere ein weiterer Teil der Laminationskraft, durch das Kraftverteilungselement auch bzw. zusätzlich in eine Grundfläche der Laminiervorrichtung bzw. der Laminationskammer übertragen. Hierfür kann das mindestens eine Kraftverteilungselement entsprechend angeordnet und/oder ausgebildet sein.

Hierdurch lässt sich in vorteilhafter Weise eine Verformung im Randbereich des Laminationsobjektes weiter minimieren, wodurch die Gefahr einer Blasenbildung bzw. eines Abrisses einer Dichtmasse im Randbereich weiter minimiert wird.

Weiter beschrieben wird ein Verfahren zur Herstellung einer Laminiervorrichtung, wobei eine Laminiervorrichtung mit mindestens einem Membranelement bereitgestellt wird. Weiter wird mindestens ein Kraftverteilungselement bereitgestellt.

Weiter wird das mindestens eine Kraftverteilungselement an der Laminiervorrichtung gehaltert. Insbesondere kann hierfür mindestens ein Halteelement zur Halterung des Kraftverteilungselements bereitgestellt werden. Das Halteelement kann an der Laminiervorrichtung, insbesondere einem Laminationsspannrahmen, befestigt werden.

Hierbei wird das mindestens eine Kraftverteilungselement derart gehaltert, dass über das mindestens eine Kraftverteilungselement eine Laminationskraft, die durch das Membranelement übertragen wird, auf zumindest einen Teilbereich einer membranseitigen Oberfläche eines in der Laminationskammer anordenbaren Laminationsobjektes verteilbar ist. Beispielsweise kann das zumindest eine Kraftverteilungselement zwischen dem mindestens einen Membranelement und einer Grundfläche der Laminationskammer angeordnet werden.

Hierdurch ergibt sich in vorteilhafter Weise ein Verfahren zur Herstellung einer Laminiervorrichtung gemäß einer der vorhergehend beschriebenen Ausführungsformen. Somit umfasst das beschriebene Verfahren zur Herstellung einer Laminiervorrichtung alle Schritte, die notwendig sind, um eine Laminiervorrichtung gemäß einer der vorhergehend erläuterten Ausführungsformen bereitzustellen.

Die Erfindung wird anhand mehrerer Ausführungsbeispiele näher erläutert. Die Figuren zeigen:
- Fig. 1: einen schematischen Querschnitt durch eine Laminiervorrichtung gemäß dem Stand der Technik,
- Fig. 2: einen schematischen Querschnitt durch ein mit Kantenüberpressung hergestelltes Photovoltaikmodul,
- Fig. 3: einen schematischen Querschnitt durch eine erfindungsgemäße Laminiervorrichtung,
- Fig. 4: einen schematischen Querschnitt durch eine erfindungsgemäße Laminiervorrichtung in einer weiteren Ausführungsform,
- Fig. 5: eine Draufsicht auf eine erfindungsgemäße Laminiervorrichtung mit mehreren Modul-Schichtkörpern,
- Fig. 6a: ein plattenförmiges Kraftverteilungselement in einer ersten Ausführungsform und
- Fig. 6b: ein plattenförmiges Kraftverteilungselement in einer weiteren Ausführungsform.

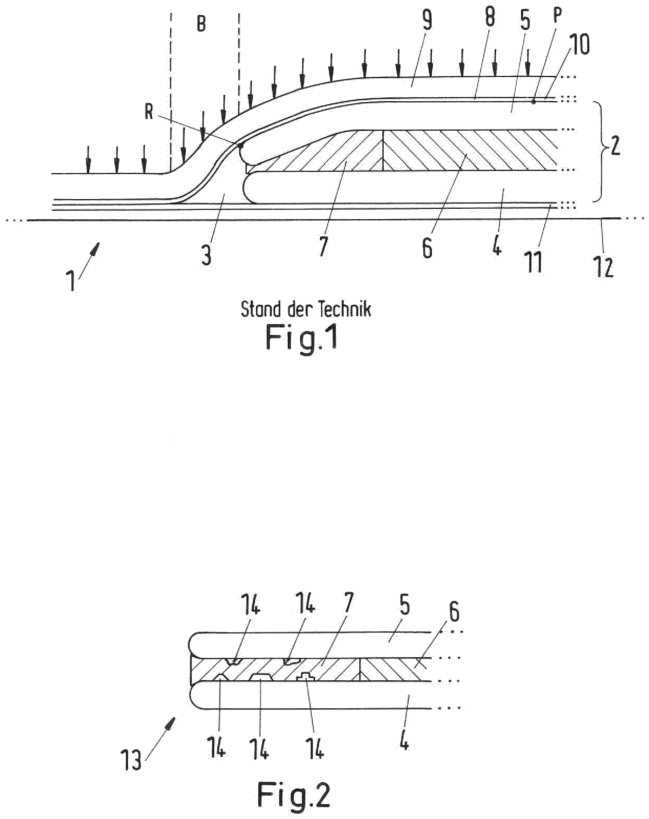

In Fig. 1 ist ein schematischer Querschnitt durch eine Laminiervorrichtung 1 gemäß dem Stand der Technik dargestellt. Als Laminationsobjekt ist ein Modul-Schichtkörper 2 in eine Laminationskammer 3 der Laminiervorrichtung 1 eingebracht. Der Modul-Schichtkörper 2 umfasst eine frontseitige Glasplatte 4 und eine rückseitige Glasplatte 5, die auch als Substratglasplatte bezeichnet werden kann. Die frontseitige Glasplatte 4 kann beispielsweise als Einscheiben-Sicherheitsglas ausgebildet sein. Zwischen den Glasplatten 4, 5 ist eine EVA-Schicht 6 angeordnet, die die Glasplatten 4, 5 im laminierten Zustand verbindet. In einem Randbereich des Modul-Schichtkörpers 2 ist eine Abdichtschicht 7, beispielsweise eine Butyl-Schicht, angeordnet, die das von den Glasplatten 4, 5 eingeschlossene Volumen nach außen hin abdichtet. Nicht dargestellt ist eine aktive Schicht, die ebenfalls zwischen den Glasplatten 4, 5 angeordnet ist und die einzelnen Solarzellen ausbildet.

Weiter dargestellt ist ein Förderband 11, auf dem der Modul-Schichtkörper 2 in den Bereich der Laminationskammer 3 gefördert wird. Das Förderband 12 kann beispielsweise als polytetrafluorethylenbeschichtetes Gewebe ausgebildet sein. Weiter dargestellt ist eine Grundfläche 12 der Laminiervorrichtung 1, die auch eine Grundfläche der Laminationskammer 3 ausbildet.

Die Laminiervorrichtung 1 umfasst ein Abdeckband 8, welches beispielsweise als polytetrafluorethylenbeschichtetes Gewebe ausgebildet sein kann. Weiter umfasst die Laminiervorrichtung 1 eine Membran 9. Das Abdeckband 8 ist hierbei zwischen der Membran 9 und einer membranseitigen Oberfläche 10 des Modul-Schichtkörpers 2 angeordnet und kann einem mechanischen Schutz der membranseitigen Oberfläche dienen. Für eine Lamination wird eine der Laminationskammer 3 abgewandten Seite der Membran 9 mit einem vorbestimmten Druck derart beaufschlagt, dass sich ein gewünschter Differenzdruck zwischen den durch die Membran voneinander getrennten Volumina ergibt, beispielsweise ein Differenzdruck von 800 mbar. Der Druck ist hierbei durch in eine Laminationsrichtung orientierte Pfeile angedeutet.

Die Laminationskammer 3 kann hierbei vakuumisiert sein. Weiter kann eine vorbestimmte Temperatur in der Laminationskammer 3 bereitgestellt werden. Die Membran 9 weist eine vorbestimmte Elastizität auf, wobei sich die Membran 9 aufgrund der Elastizität nicht formgenau an einen Kantenverlauf des Modul-Schichtkörpers 2 anpasst und somit im Querschnitt in einem Bereich B, der an einen seitlichen Rand des Modul-Schichtkörpers 2 angrenzt, einen im Wesentlichen S-förmigen Verlauf aufweist. Durch diesen Verlauf der Membran wirkt auf einen Rand R der rückseitigen Glasplatte 5 eine resultierende Laminationskraft, die insbesondere höher ist als eine Laminationskraft, die an einem Punkt P wirkt, der in Bezug auf die rückseitige Glasplatte 5 in einem Innenabschnitt der rückseitigen Glasplatte 5 liegt.

Dies bedingt eine Verformung der rückseitigen Glasplatte 5, deren Randbereich in der Laminationsrichtung hin zur frontseitigen Glasplatte 4 verbogen wird. Hierdurch wird insbesondere die Abdichtschicht 7 im Randbereich des Modul-Schichtkörpers 2 verdrängt.

In Fig. 2 ist ein mit Kantenüberpressung hergestelltes Photovoltaikmodul 13 schematisch im Querschnitt abgebildet. Nach der in Fig. 1 dargestellten Lamination strebt die rückseitige Glasplatte 5 wieder in einen unverformten Ursprungszustand zurück, insbesondere bewegt sich der Randbereich der rückseitigen Glasplatte 5 entgegen der Laminationsrichtung wieder von der frontseitigen Glasplatte 4 weg. Dies bedingt insbesondere im Randbereich eine große Verformung und Ausdehnung der Abdichtschicht 7. Da die Abdichtschicht 7 dieser Verformung entgegenwirkt, entstehen innere Spannungen. Hierdurch kann sich die Abdichtschicht 7 zumindest in Teilbereichen von den Glasplatten 4, 5, insbesondere der frontseitigen Glasplatte 4, lösen, wodurch Blasen 14 im Photovoltaikmodul 13 entstehen.

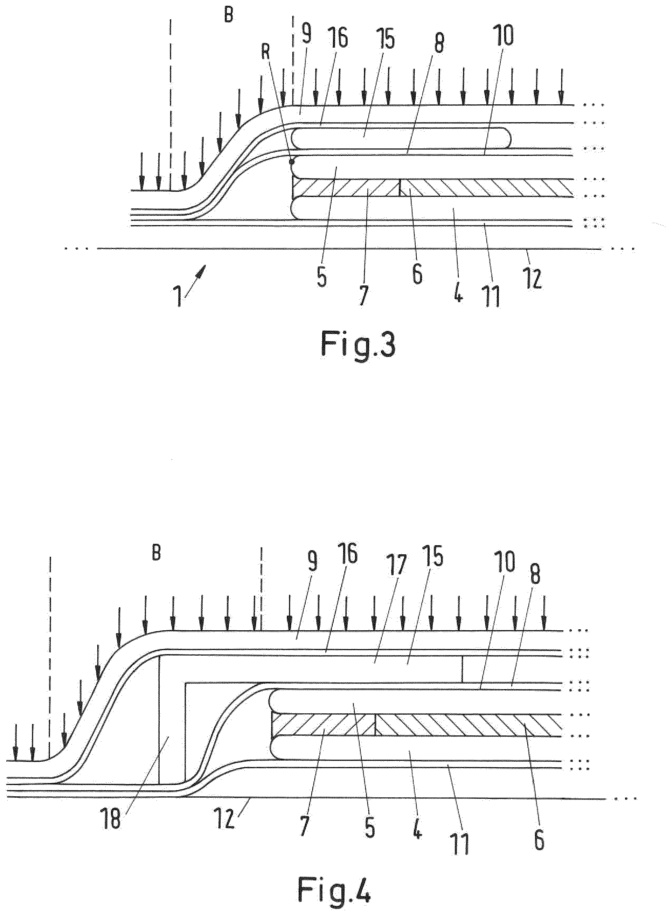

In Fig. 3 ist ein schematischer Querschnitt durch eine erfindungsgemäße Laminiervorrichtung 1 dargestellt. Im Gegensatz zu der in Fig. 1 dargestellten Ausführungsform der Laminiervorrichtung 1 umfasst die Laminiervorrichtung 1 ein als Versteifungsplatte ausgebildetes Kraftverteilungselement 15. Das Kraftverteilungselement 15 ist zwischen der Membran 9 und der membranseitigen Oberfläche 10 des Modul-Schichtkörpers 2 angeordnet. Weiter dargestellt ist ein Haltegewebe 16 zur Halterung des Kraftverteilungselements 15. Ebenfalls dargestellt ist das Abdeckband 8. Das Haltegewebe 16 ist zwischen der Membran 9 und dem Kraftverteilungselement 15 angeordnet. Das Abdeckband 8 ist zwischen dem Kraftverteilungselement 15 und der membranseitigen Oberfläche 10 angeordnet. Allerdings ist es nicht zwingend notwendig, jedoch vorteilhaft, ein Abdeckband 8 vorzusehen.

Es ist aber auch möglich, dass das Haltegewebe 16 zwischen dem Kraftverteilungselement 15 und dem Abdeckband 8 bzw. der membranseitigen Oberfläche 10 angeordnet ist. Auch kann das Abdeckband 8 als Haltegewebe 16 ausgebildet sein oder dieses bereitstellen. Ist kein Abdeckband 8 vorgesehen, so kann das Kraftverteilungselement 15, insbesondere zumindest ein Teil einer Oberfläche des Kraftverteilungselements 15, direkt auf der membranseitigen Oberfläche 10 aufliegen.

Das Kraftverteilungselement 15 erstreckt sich hierbei von einem seitlichen Rand des Modul-Schichtkörpers 2 in Richtung einer Mitte des Modul-Schichtkörpers 2, wobei jedoch nur ein Teilbereich der membranseitigen Oberfläche 10 des Modul-Schichtkörpers 2 durch das Kraftverteilungselement 15 abgedeckt wird. Insbesondere kann das Kraftverteilungselement hierfür eine Breite aufweisen, die kleiner als eine Breite des Modul-Schichtkörpers 2 ist. Insbesondere kann eine Breite des Kraftverteilungselements in einem Bereich von 1/10 bis zu 1/3 der Breite des Laminationsobjektes, also des Modul-Schichtkörpers 2, liegen.

Weiter ist dargestellt, dass das Kraftverteilungselement 15 mit dem seitlichen Rand des Modul-Schichtkörpers 2 bündig angeordnet ist. Dies ist jedoch nicht zwingend. Insbesondere kann das Kraftverteilungselement 15 auch, insbesondere um ein vorbestimmtes Maß, über den seitlichen Rand des Modul-Schichtkörpers 2 nach außen hinausragen oder mit einem vorbestimmten Versatz vom seitlichen Rand des Modul-Schichtkörpers 2 nach innen versetzt angeordnet sein.

Die durch den Druck auf die Membran 9 erzeugte Laminationskraft, insbesondere durch die durch den Druck auf den im Bereich B angeordneten Teil der Membran 9 erzeugte Laminationskraft, die auf den Rand R der rückseitigen Glasplatte 5 wirkt, wird durch das Kraftverteilungselement 15 gleichmäßig auf den durch das Kraftverteilungselement 15 abgedeckten Teilbereich der membranseitigen Oberfläche 10 des Modul-Schichtkörpers 2 verteilt. Hierdurch wird die Verformung der rückseitigen Glasplatte 5, insbesondere hin zur frontseitigen Glasplatte 4, verhindert oder reduziert, wodurch auch die Verformung der Abdichtschicht 7 verringert wird. Folglich wird die Gefahr einer wie in Fig. 2 dargestellten Blasenbildung verringert.

In Fig. 4 ist ein schematischer Querschnitt durch eine erfindungsgemäße Laminiervorrichtung 1 in einer weiteren Ausführungsform dargestellt. Im Unterschied zu der in Fig. 3 dargestellten Ausführungsform ist das Kraftverteilungselement 15 im Querschnitt L-förmig ausgebildet. Somit umfasst das Kraftverteilungselement 15 einen plattenförmig ausgebildeten Abschnitt 17 und einen Abstützabschnitt 18. Der Abstützabschnitt 18 dient hierbei zur Abstützung auf der Grundfläche 12. Somit kann ein Teil der über die Membran 9 übertragenen Laminationskraft über den Abstützabschnitt 18 in die Grundfläche 12 eingeleitet werden, wobei ein weiterer Teil über den plattenförmigen Abschnitt 17 auf den Teilbereich der membranseitigen Oberfläche 10 des Modul-Schichtkörpers 2 verteilt wird. In Fig. 4 ist dargestellt, dass sich der Abstützabschnitt 18 über das Abdeckband 8, das Trägergewebe 16 und das Transportband 11 auf der Grundfläche 12 abstützt. Der Abstützabschnitt 18 kann hierbei mit einem vorbestimmten Abstand beabstandet von einem seitlichen Rand des Modul-Schichtkörpers 2 angeordnet sein. Hierdurch wird in vorteilhafter Weise ein Verlauf des Abdeckbandes 18 und des Trägergewebes 16 nicht behindert.

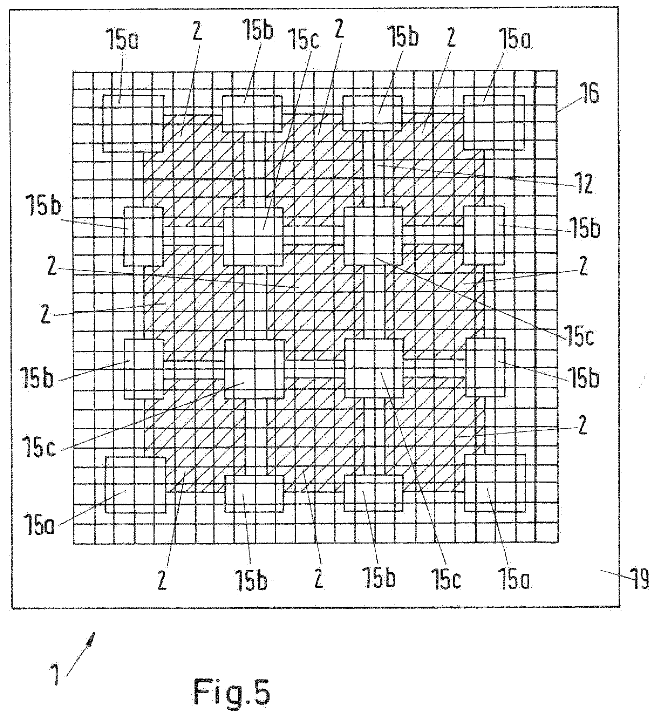

In Fig. 5 ist eine schematische Draufsicht auf eine erfindungsgemäße Laminiervorrichtung 1 dargestellt. Hierbei ist dargestellt, dass mehrere, insbesondere neun, Modul-Schichtkörper 2 matrixartig angeordnet sind. Im dargestellten Fall umfasst die Anordnung drei Reihen mit jeweils drei Modul-Schichtkörpern 2. Weiter dargestellt ist, dass die Modul-Schichtkörper 2 mit vorbestimmten Abständen zueinander angeordnet sind.

Die Laminiervorrichtung 1 umfasst mehrere Kraftverteilungselemente 15a, 15b, 15c. Die Kraftverteilungselemente 15a, 15b, 15c können sich hierbei in ihrer jeweiligen Ausbildung, z.B. in ihren Dimensionen, unterscheiden, wobei gleiche Bezugszeichen Kraftverteilungselemente gleicher Ausbildung bezeichnen.

Kraftverteilungselemente 15a gemäß einer ersten Ausbildung sind hierbei derart angeordnet und ausgebildet, dass zumindest ein Teil einer Laminationskraft auf einen Eckbereich einer Oberfläche genau eines Modul-Schichtkörpers 2 verteilt wird und ein weiteren Teil in eine Grundfläche 12 eingeleitet wird.

Kraftverteilungselemente 15b gemäß einer zweiten Ausbildung sind hierbei derart angeordnet und ausgebildet, dass zumindest ein Teil einer Laminationskraft auf einen Eckbereich einer Oberfläche eines ersten Modul-Schichtkörpers 2 und auf einen Eckbereich einer Oberfläche eines in einer Reihe oder einer Spalte benachbarten Modul-Schichtkörpers 2 verteilt wird. Ein weiterer Teil der Laminationskraft wird in die Grundfläche 12 eingeleitet wird.

Kraftverteilungselemente 15c gemäß einer dritten Ausbildung sind hierbei derart angeordnet und ausgebildet, dass zumindest ein Teil einer Laminationskraft, insbesondere aber die gesamte Laminationskraft, auf Eckbereiche von Oberflächen von vier benachbarten Modul-Schichtkörpern 2 verteilt wird.

Weiter dargestellt ist ein Trägergewebe 16, welches maschenartig ausgebildet ist. Die Kraftverteilungselemente 15a, 15b, 15c können nicht dargestellte Löcher aufweisen, wodurch die Kraftverteilungselemente 15a, 15b, 15c über geeignete Befestigungsmittel, beispielsweise einen Draht oder einen Faden, an dem Trägergewebe 16 befestigt, beispielsweise vernäht, werden können. Dies ermöglicht eine einfache, insbesondere lösbare, Befestigung der Kraftverteilungselemente 15a, 15b, 15c an einer gewünschten Position und mit einer gewünschten Ausrichtung am Trägergewebe 16.

Weiter ist dargestellt, dass das Trägergewebe 16 an einem ortsfesten Teil der Laminiervorrichtung, nämlich an einem Laminatorspannrahmen 19, befestigt ist. Hierdurch sind die Kraftverteilungselement 15a, 15b, 15c an der Laminiervorrichtung 1 befestigt.

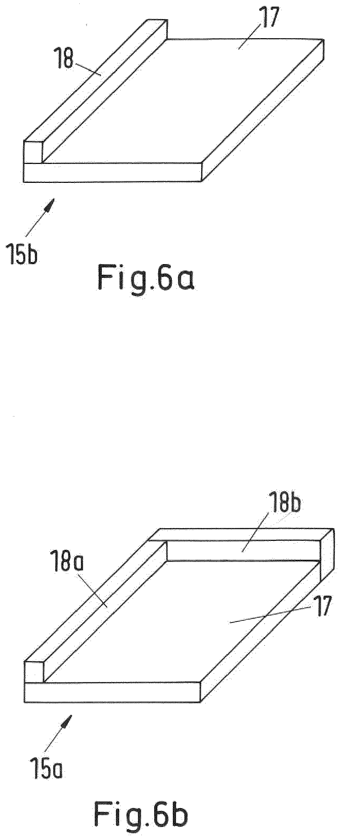

In Fig. 6a ist ein Kraftverteilungselement 15b gemäß der vorhergehend beschriebenen zweiten Ausbildung dargestellt. Das Kraftverteilungselement 15b umfasst einen plattenförmigen Abschnitt 17 und einen Abstützabschnitt 18. Der Abstützabschnitt 18 erstreckt sich hierbei entlang einer Seite, insbesondere einer Längsseite, des plattenförmigen Abschnitts 17. Hierbei ist der Abstützabschnitt 18 an dem Rand des plattenförmigen Abschnitts 17 angeordnet.

In Fig. 6b ist ein Kraftverteilungselement 15a gemäß der vorhergehend erläuterten ersten Ausbildung perspektivisch dargestellt. Das Kraftverteilungselement 15a umfasst einen plattenförmigen Abschnitt 17, einen ersten Abstützabschnitt 18a und einen weiteren Abstützabschnitt 18b. Der erste Abstützabschnitt 18a erstreckt sich hierbei entlang einer ersten Seite des plattenförmigen Abschnitts 17, wobei sich der weitere Abstützabschnitt 18b entlang einer benachbarten Seite des plattenförmigen Abschnitts 17 erstreckt.

Die Abstützabschnitte 18, 18a, 18b können z.B. als Abstützstege ausgebildet sein. Auch können die Abstützabschnitte 18a, 18b an benachbarten Rändern des plattenförmigen Abschnitts 17 angeordnet sein.

Die in Fig. 5 dargestellten Kraftverteilungselemente 15c gemäß der dritten Ausbildung können hierbei ausschließlich einen plattenförmigen Abschnitt 17 und keinen Abstützabschnitt 18 aufweisen. Allerdings ist auch vorstellbar, dass die Kraftverteilungselemente 15c Abstützabschnitte aufweisen, die in die in Fig. 5 dargestellten Zwischenbereiche zwischen benachbarten Modul-Schichtkörpern 2 ragen, wodurch die entsprechenden Kraftverteilungselemente 15c zusätzlich auf der in Fig. 5 dargestellten Grundfläche 12 abgestützt werden können.

In Fig. 5 ist dargestellt, dass in Bezug auf die Anordnung der Modul-Schichtkörper 2 an bzw. über äußeren Rändern der Anordnung angeordnete Kraftverteilungselemente 15a, 15b jeweils mindestens einen Abstützabschnitt 18, 18a, 18b aufweisen. Die in Bezug auf die Anordnung mehrerer Modul-Schichtkörper 2 an bzw. über innenliegenden Rändern der Modulschichtkörper 2 angeordneten Kraftverteilungselemente 15c müssen hierbei nicht zwingend einen Abstützabschnitt 18, 18a, 18b aufweisen. Hierbei können an bzw. über äußeren Rändern der Anordnung angeordnete Kraftverteilungselemente 15a, 15b andere Dimensionen aufweisen als die an bzw. über innenliegenden Rändern der Anordnung angeordneten Kraftverteilungselemente 15c. Beispielsweise können an bzw. über äußeren Rändern der Anordnung angeordnete Kraftverteilungselemente 15a, 15b Dimensionen von 0,2m x 0,3m aufweisen, während an bzw. über innenliegenden Rändern der Anordnung angeordnete Kraftverteilungselemente 15c Dimensionen von 0,3m x 0,3m aufweisen können. Allerdings können an bzw. über äußeren Ecken der Anordnung angeordnete Kraftverteilungselemente 15a auch andere Dimensionen aufweisen als die an bzw. über den verbleibenden äußeren Randabschnitten angeordneten Kraftverteilungselemente 15b, beispielsweise die gleichen Dimensionen wie die an bzw. über innenliegenden Rändern der Anordnung angeordnete Kraftverteilungselemente 15c.

### Bezugszeichenliste

- 1: Laminiervorrichtung
- 2: Modul-Schichtkörper
- 3: Laminationskammer
- 4: vordere Glasplatte
- 5: rückseitige Glasplatte
- 6: EVA-Schicht
- 7: Abdichtschicht
- 8: Abdeckband
- 9: Membran
- 10: membranseitige Oberfläche
- 11: Transportband
- 12: Grundfläche
- 13: Photovoltaikmodul
- 14: Blase
- 15: Kraftverteilungselement
- 15a: Kraftverteilungselement
- 15b: Kraftverteilungselement
- 15c: Kraftverteilungselement
- 16: Trägergewebe
- 17: plattenförmiger Abschnitt
- 18: Abstützabschnitt
- 18a: Abstützabschnitt
- 18b: Abstützabschnitt
- 19: Laminatorspannrahmen
- B: Bereich
- R: Rand
- P: Punkt

## Patentansprüche

1. Laminiervorrichtung, wobei die Laminiervorrichtung (1) zumindest ein Membranelement umfasst, wobei die Laminiervorrichtung (1) zumindest ein Kraftverteilungselement (15a, 15b, 15c) umfasst, wobei über das mindestens eine Kraftverteilungselement (15a, 15b, 15c) eine Laminationskraft, die durch das Membranelement auf ein Laminationsobjekt übertragbar oder ausübbar ist, auf zumindest einen Teilbereich einer membranseitigen Oberfläche (10) des Laminationsobjekts verteilbar ist,
**dadurch gekennzeichnet, dass**
das mindestens eine Kraftverteilungselement (15a, 15b, 15c) an der Laminiervorrichtung (1) gehaltert ist, wobei die Laminiervorrichtung (1) mindestens ein Halteelement zur Halterung des mindestens einen Kraftverteilungselements (15a, 15b, 15c) umfasst, wobei das Halteelement als Gewebe (16) ausgebildet ist.

2. Laminiervorrichtung nach Anspruch 1, **dadurch gekennzeichnet, dass** das Halteelement an einem Laminatorspannrahmen (19) befestigt ist.

3. Laminiervorrichtung nach einem der Ansprüche 1 bis 2, **dadurch gekennzeichnet, dass** das Kraftverteilungselement (15a, 15b, 15c) einen plattenförmig ausgebildeten Abschnitt (17) umfasst oder plattenförmig ausgebildet ist.

4. Laminiervorrichtung nach einem der Ansprüche 1 bis 3, **dadurch gekennzeichnet, dass** das Kraftverteilungselement (15a, 15b) zumindest einen Abstützabschnitt (18, 18a, 18b) zur Abstützung auf einer Grundfläche (12) der Laminiervorrichtung (1) aufweist.

5. Laminiervorrichtung nach einem der Ansprüche 1 bis 4, **dadurch gekennzeichnet, dass** das Kraftverteilungselement (15a, 15b, 15c) plattenförmig ausgebildet ist, wobei eine Oberfläche des plattenförmigen Kraftverteilungselements (15a, 15b, 15c) in einem Teilbereich der Oberfläche einen erhabenen Bereich aufweist oder ausbildet.

6. Laminiervorrichtung nach einem der Ansprüche 1 bis 5, **dadurch gekennzeichnet, dass** die Laminiervorrichtung (1) mehrere Kraftverteilungselemente (15a, 15b, 15c) umfasst, die jeweils an der Laminiervorrichtung (1) gehaltert sind.

7. Verfahren zur Herstellung mindestens eines Laminats, umfassend zumindest die Schritte:
- Anordnen mindestens eines Laminationsobjekts in einer Laminiervorrichtung (1), wobei die Laminiervorrichtung (1) zumindest ein Kraftverteilungselement (15a, 15b, 15c) umfasst, wobei über das mindestens eine Kraftverteilungselement (15a, 15b, 15c) eine Laminationskraft, die durch das Membranelement auf eine membranseitige Oberfläche (10) des Laminationsobjekts übertragbar oder ausübbar ist, auf zumindest einen Teilbereich der membranseitigen Oberfläche (10) verteilbar ist, wobei das mindestens eine Kraftverteilungselement (15a, 15b, 15c) an der Laminiervorrichtung (1) gehaltert ist, wobei die Laminiervorrichtung (1) mindestens ein Halteelement zur Halterung des mindestens einen Kraftverteilungselements (15a, 15b, 15c) umfasst, wobei das Halteelement als Gewebe (16) ausgebildet ist,
- Bereitstellen eines vorbestimmten Drucks auf das Membranelement und/oder einer vorbestimmten Temperatur.

8. Verfahren nach Anspruch 7, **dadurch gekennzeichnet, dass** die Laminationskraft durch das mindestens eine Kraftverteilungselement (15a, 15b, 15c) auch in eine Grundfläche (12) der Laminiervorrichtung (1) übertragen wird.

## Claims

1. Lamination device, wherein the lamination device (1) comprises at least one membrane element, wherein the lamination device (1) comprises at least one force distribution element (15a, 15b, 15c), wherein the at least one force distribution element (15a, 15b, 15c) is capable of distributing a lamination force that the membrane element can transmit to or exert on a lamination object over at least part of an area of a membrane-side surface (10) of the lamination object, **characterized in that**
the at least one force distribution element (15a, 15b, 15c) is mounted on the lamination device (1), wherein the lamination device (1) comprises at least one holding element for holding the at least one force distribution element (15a, 15b, 15c), wherein the holding element is in the form of a web (16).

2. Lamination device according to Claim 1, **characterized in that** the holding element is secured on a laminator clamping frame (19).

3. Lamination device according to either of Claims 1 and 2, **characterized in that** the force distribution element (15a, 15b, 15c) comprises a section (17) in the form of a plate or takes the form of a plate.

4. Lamination device according to any of Claims 1 to 3, **characterized in that** the force distribution element (15a, 15b) includes at least one brace section (18, 18a, 18b) for bracing against a base surface (12) of the lamination device (1).

5. Lamination device according to any of Claims 1 to 4, **characterized in that** the force distribution element (15a, 15b, 15c) takes the form of a plate, wherein a surface of the force distribution element in plate form (15a, 15b, 15c) has or forms an elevated region over part of the surface.

6. Lamination device according to any of Claims 1 to 5, **characterized in that** the lamination device (1) comprises multiple force distribution elements (15a, 15b, 15c) that are each mounted on the lamination device (1).

7. Process for producing at least one laminate, comprising at least the steps of:
- disposing at least one lamination object in a lamination device (1), wherein the lamination device (1) comprises at least one force distribution element (15a, 15b, 15c), wherein the at least one force distribution element (15a, 15b, 15c) is capable of distributing a lamination force that the membrane element can transmit to or exert on a membrane-side surface (10) of the lamination object over at least part of an area of the membrane-side surface (10), wherein the at least one force distribution element (15a, 15b, 15c) is mounted on the lamination device (1), wherein the lamination device (1) comprises at least one holding element for holding the at least one force distribution element (15a, 15b, 15c), wherein the holding element is in the form of a web (16),
- providing a predetermined pressure on the membrane element and/or a predetermined temperature.

8. Process according to Claim 7, **characterized in that** the lamination force is also transmitted into a base area (12) of the lamination device (1) by means of the at least one force distribution element (15a, 15b, 15c).

## Revendications

1. Dispositif de stratification, le dispositif de stratification (1) comportant au moins un élément formant membrane, le dispositif de stratification (1) comportant au moins un élément de distribution de force (15a, 15b, 15c), une force de stratification qui peut être transmise ou exercée sur un objet à stratifier par l'élément formant membrane pouvant être distribuée par le biais de l'au moins un élément de distribution de force (15a, 15b, 15c) sur au moins une zone partielle d'une surface côté membrane (10) de l'objet à stratifier,
**caractérisé en ce que**
l'au moins un élément de distribution de force (15a, 15b, 15c) est maintenu sur le dispositif de stratification (1), le dispositif de stratification (1) comportant au moins un élément de maintien destiné à maintenir l'au moins un élément de distribution de force (15a, 15b, 15c), l'élément de maintien étant réalisé sous la forme d'un tissu (16).

2. Dispositif de stratification selon la revendication 1, **caractérisé en ce que** l'élément de maintien est fixé à un cadre de serrage de stratificateur (19).

3. Dispositif de stratification selon l'une des revendications 1 à 2, **caractérisé en ce que** l'élément de distribution de force (15a, 15b, 15c) comporte une portion (17) réalisée en forme de plaque ou est réalisé en forme de plaque.

4. Dispositif de stratification selon l'une des revendications 1 à 3, **caractérisé en ce que** l'élément de distribution de force (15a, 15b) possède au moins une portion d'appui (18, 18a, 18b) destinée à prendre appui sur une surface de base (12) du dispositif de stratification (1).

5. Dispositif de stratification selon l'une des revendications 1 à 4, **caractérisé en ce que** l'élément de distribution de force (15a, 15b, 15c) est réalisé en forme de plaque, une surface de l'élément de distribution de force (15a, 15b, 15c) en forme de plaque possédant ou formant une zone en relief dans une zone partielle de la surface.

6. Dispositif de stratification selon l'une des revendications 1 à 5, **caractérisé en ce que** le dispositif de stratification (1) comporte plusieurs éléments de distribution de force (15a, 15b, 15c) qui sont respectivement maintenus sur le dispositif de stratification (1).

7. Procédé de fabrication d'au moins un stratifié, comprenant au moins les étapes suivantes :
- disposition d'au moins un objet à stratifier dans un dispositif de stratification (1), le dispositif de stratification (1) comportant au moins un élément de distribution de force (15a, 15b, 15c), une force de stratification qui peut être transmise ou exercée par l'élément formant membrane sur une surface côté membrane (10) de l'objet à stratifier pouvant être distribuée sur au moins une zone partielle d'une surface côté membrane (10), l'au moins un élément de distribution de force (15a, 15b, 15c) étant maintenu sur le dispositif de stratification (1), le dispositif de stratification (1) comportant au moins un élément de maintien destiné à maintenir l'au moins un élément de distribution de force (15a, 15b, 15c), l'élément de maintien étant réalisé sous la forme d'un tissu (16),
- fourniture d'une pression prédéterminée sur l'élément formant membrane et/ou d'une température prédéterminée.

8. Procédé selon la revendication 7, **caractérisé en ce que** la force de stratification est également transmise dans une surface de base (12) du dispositif de stratification (1) par l'au moins un élément de distribution de force (15a, 15b, 15c).
